# FASCICULE DE BREVET EUROPEEN

(11) **EP 2 829 999 B1**
(45) Date de publication et mention de la délivrance du brevet: **01.03.2017**
(21) Numéro de dépôt: 14177204.6
(22) Date de dépôt: 16.07.2014
(51) Int. Cl.: G06F 21/83

(54) **Dispositif de sécurisation d'un clavier capacitif et terminal correspondant**
Sicherungsvorrichtung einer kapazitiven Tastatur, und entsprechendes Endgerät
Device for securing a capacitive keypad and corresponding terminal

(30) Priorité: 26.07.2013 FR 1357422
(43) Date de publication de la demande: 28.01.2015
(73) Titulaire: INGENICO GROUP, 75015 Paris (FR)
(72) Inventeur: Fleury, Fabrice, 07130 Touland (FR); Lemaire, Jean-Eric, 26000 Valence (FR)
(74) Mandataire: Vidon Brevets & Stratégie

(56) Documents cités:
- WO-A1-2012/139133
- US-A1- 2012 326 998

## Description

### 1 DOMAINE DE L'INVENTION

La présente invention se rapporte au domaine de la sécurisation de terminaux de paiement, et plus particulièrement à la protection des données saisies par un utilisateur via le clavier de tels terminaux.

En effet, de telles données, comme par exemple le code secret saisi par l'utilisateur, peuvent être considérées comme des données sensibles devant être protégées d'éventuels « pirates », afin de respecter des normes de sécurité et d'agréments pour la mise sur le marché de tels terminaux.

En particulier, l'invention s'applique aux terminaux de paiement électroniques présentant un clavier capacitif.

### 2 SOLUTIONS DE L'ART ANTERIEUR

Certains terminaux de paiement électroniques actuels intègrent un clavier tactile, ce qui pose de nouveaux problèmes de sécurité liés à l'espionnage de l'utilisation de tels claviers.

En effet, il existe des systèmes « espions » visant à tenter de retrouver les données saisies par l'utilisateur via le clavier tactile du terminal de paiement électronique, par observation des « traces » laissées par les doigts de l'utilisateur ou encore par mesure du niveau de signal au niveau des touches d'un clavier capacitif. Or, il n'existe à ce jour pas de solutions fiables permettant de pallier ces problèmes de « piratage » de clavier capacitif.

Certaines solutions connues ont pour but de détecter la détérioration d'un tel clavier, comme par exemple un arrachage ou une brisure de la vitre du clavier, par l'adjonction d'un « anneau de garde » autour du clavier, par exemple sous la forme d'une ligne conductrice en cuivre ou selon une technologie dite « ITO » (pour « Indium Tin Oxide »).

En revanche, ce type de solutions de protection des claviers tactiles contre l'intrusion ne permet pas de résoudre les problèmes de piratage des données saisies via des claviers capacitifs.

Le document WO 2012/139133 A1 décrit un dispositif de sécurisation d'un clavier capacitif comprenant un circuit permettant la connexion d'une capacité entre l'électrode réceptrice à une électrode émettrice afin de simuler un appui de touche sur le clavier.

### 3 RESUME DE L'INVENTION

L'invention ne présente pas les inconvénients de l'art antérieur. En effet, l'invention concerne un dispositif de sécurisation d'un clavier capacitif d'un terminal de paiement électronique comprenant au moins un processeur de gestion des touches dudit clavier capacitif, selon la revendication 1.

Selon l'invention, le dispositif de sécurisation est apte à communiquer avec ledit processeur et ledit dispositif de sécurisation comprend un module de pilotage (10) d'au moins un élément de simulation (S) d'au moins un appui touche sur ledit clavier capacitif, ledit module de pilotage comprenant des moyens de réception (101) d'au moins une commande de simulation (Cmd1) transmise aléatoirement par ledit processeur.

Ainsi, l'invention propose une solution nouvelle et inventive de la sécurisation d'un clavier capacitif d'un terminal de paiement électronique, notamment à l'égard de « pirates » mettant en oeuvre des systèmes d'espionnage de la saisie d'un code confidentiel basés sur une mesure du niveau de signal des touches par exemple.

La solution de l'invention est basée sur la simulation d'appuis touches aléatoires, par exemple pendant une saisie de données confidentielles par un utilisateur, de façon à perturber un éventuel espionnage. Par ailleurs, cette simulation étant pilotée par le processeur de gestion des touches du clavier capacitif du terminal de paiement électronique lui-même, ce processeur n'est pas perturbé par ces appuis touches simulés car il n'interprète pas comme des appuis touches réels les appuis touches simulés dont il est à l'origine.

En revanche, un dispositif espion, mis en oeuvre sur le clavier capacitif du terminal de paiement électronique, se trouve perturbé par ces appuis touches aléatoires, qu'il interprète comme des appuis touches réels qui l'empêchent donc de détecter les données sensibles saisies par l'utilisateur au même moment.

Selon une caractéristique particulière de l'invention, l'élément de simulation (S) met en oeuvre au moins une capacité (CP1) d'une valeur prédéterminée, dite capacité parasite, et le module de pilotage déclenche ladite capacité parasite (CP1) par fermeture d'au moins un interrupteur, ladite capacité parasite (CP1) étant reliée, lorsque ledit interrupteur est fermé, à au moins une électrode réceptrice (Y1) reliée à au moins une touche dudit clavier capacitif.

Ainsi, selon ce mode de réalisation de l'invention, le dispositif de sécurisation met en oeuvre une simulation d'un appui touche via une capacité dite parasite, déclenchée par exemple par la fermeture d'un interrupteur à réception d'une commande de simulation en provenance du processeur du terminal de paiement électronique. De cette manière, lorsque l'interrupteur est fermé, la capacité parasite se trouve directement reliée à une électrode réceptrice elle-même reliée à une ou plusieurs touches du clavier tactile.

En fonction des caractéristiques de la commande de simulation (durée, fréquence, ...), une ou plusieurs touches reliées à l'électrode réceptrice sont concernées et un ou plusieurs appuis touches sont donc simulés.

Selon un aspect particulier de l'invention, l'élément de simulation (S) met en oeuvre au moins une capacité (CP1) d'une valeur prédéterminée, dite capacité parasite, et le module de pilotage déclenche ladite capacité parasite (CP1) par l'intermédiaire d'au moins un transistor, ladite capacité parasite (CP1) étant reliée, lorsque ledit transistor est activé, à au moins une électrode réceptrice (Y1) reliée à au moins une touche dudit clavier capacitif.

Ainsi, selon ce mode de réalisation de l'invention, le dispositif de sécurisation met en oeuvre une simulation d'un appui touche via une capacité dite parasite, déclenchée par exemple par l'intermédiaire d'un transistor à réception d'une commande de simulation en provenance du processeur du terminal de paiement électronique. De cette manière, lorsque le transistor est activé, la capacité parasite se trouve directement reliée à une électrode réceptrice elle-même reliée à une ou plusieurs touches du clavier tactile.

En fonction des caractéristiques de la commande de simulation (durée, fréquence, ...), une ou plusieurs touches reliées à l'électrode réceptrice sont concernées et un ou plusieurs appuis touches sont donc simulés.

En particulier, le module de pilotage est apte à piloter au moins deux capacités parasites (CP1, CP2), à réception d'au moins deux commandes de simulation distinctes (Cmd1, Cmd2) en provenance dudit processeur, chacune desdites capacités parasites étant reliée à une électrode réceptrice distincte (Y1, Y2) permettant la simulation d'au moins toutes les touches numériques dudit clavier capacitif.

Ainsi, selon ce mode de réalisation de l'invention, au moins toutes les touches numériques, correspondant la plupart du temps aux données sensibles telles qu'un code confidentiel ou un numéro de carte bancaire, peuvent être simulées pour leurrer un éventuel dispositif espion mis en oeuvre sur le clavier capacitif du terminal de paiement électronique.

Par exemple, la valeur prédéterminée de ladite capacité parasite correspond sensiblement à une valeur de capacité représentative d'un appui sur une touche dudit clavier capacitif.

Selon un aspect particulier de l'invention, le dispositif est implémenté dans une zone sécuritaire dudit terminal de paiement électronique.

Ainsi, selon ce mode de réalisation de l'invention, le dispositif de sécurisation se situe lui-même, au sein du terminal de paiement électronique, dans une zone protégée par des moyens mis en oeuvre dans le terminal de paiement électronique, de façon à ce que le dispositif de sécurisation ne puisse pas être inhibé ou détérioré. La sécurité de la saisie de données sensibles sur le clavier capacitif du terminal de paiement électronique est donc optimale.

L'invention concerne également un terminal de paiement électronique, comprenant un dispositif de sécurisation tel que décrit précédemment.

L'invention concerne également un procédé de sécurisation selon la revendication 7.

L'invention concerne également un programme d'ordinateur téléchargeable depuis un réseau de communication et/ou stocké sur un support lisible par ordinateur et/ou exécutable par un processeur comprenant des instructions de code de programme pour l'exécution du procédé de sécurisation tel que décrit précédemment, lorsqu'il est exécuté par un processeur.

### 4 LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un schéma d'un dispositif de sécurisation d'un clavier tactile d'un terminal de paiement électronique selon un mode de réalisation de l'invention ;
- les figures 2 et 4 présentent deux exemples de mise en oeuvre d'un dispositif de sécurisation d'un clavier tactile d'un terminal de paiement électronique, selon un mode de réalisation de l'invention ;
- la figure 3 présente les principales étapes du procédé de sécurisation d'un clavier tactile d'un terminal de paiement électronique, selon un mode de réalisation de l'invention.

### 5 DESCRIPTION DETAILLEE DE L'INVENTION

### 5.1 Principe général

Le principe de l'invention consiste à mettre en oeuvre, dans un terminal de paiement électronique, un dispositif de sécurisation du clavier capacitif du terminal de paiement électronique, visant à leurrer un éventuel système d'espionnage des appuis touches sur le clavier, par exemple lors de la saisie de données dites sensibles par un utilisateur.

En effet, le principe de l'invention repose sur la simulation d'appuis touches de façon à perturber un éventuel système d'espionnage basé sur la mesure du signal au niveau des touches du clavier capacitif. Ainsi, cette simulation peut être mise en oeuvre par exemple en même temps que la saisie réelle de données par un utilisateur via le clavier capacitif, moment où l'éventuel dispositif espion est également mis en oeuvre.

En revanche, le dispositif de sécurisation ne doit pas perturber, par ces simulations d'appuis touches, le procédé de gestion des touches du terminal de paiement électronique lui-même. C'est pourquoi l'invention prévoit que le dispositif de sécurisation communique avec le procédé de gestion des touches du clavier capacitif du terminal de paiement électronique. Cette communication peut se faire directement, du processeur de gestion des touches au dispositif de sécurisation selon l'invention, ou via un ou plusieurs modules/éléments intermédiaires, selon les différents modes de réalisation particuliers de l'invention.

Ainsi, l'invention prévoit, selon ses différents modes de réalisation, que ce processeur transmette, aléatoirement, une ou plusieurs commandes de simulation de simulation d'appuis touches au dispositif de sécurisation, afin de leurrer un éventuel système d'espionnage. De ce fait, comme c'est le processeur qui est à l'origine (directement ou indirectement) des commandes de simulation d'appuis touches, il n'est pas perturbé dans son interprétation des appuis touches « réels » effectués par un utilisateur sur le clavier. En effet, le processeur sait à quel moment il transmet une commande de simulation d'appui touche et n'interprète donc pas cet appui touche simulé comme un appui touche réel.

Enfin, le caractère aléatoire de cette simulation d'appuis touches permet d'éviter une détection du dispositif de sécurisation de l'invention, de façon à ce qu'un éventuel dispositif espion ne puisse pas être modifié pour en tenir compte. Ainsi, même si un éventuel système espion venait à soupçonner l'existence de la mise en oeuvre de ce dispositif de sécurisation selon l'invention, il ne pourrait tenter de le contourner, les appuis touches simulés n'étant pas identifiables ni prévisibles du fait de leur caractère aléatoire.

Il est à noter que l'invention s'applique également à tout terminal de paiement ayant une dalle tactile ou « touch screen » utilisant la technologie capacitive, c'est-à-dire mettant en oeuvre des électrodes émettrices/réceptrices.

### 5.2 Description d'un mode de réalisation

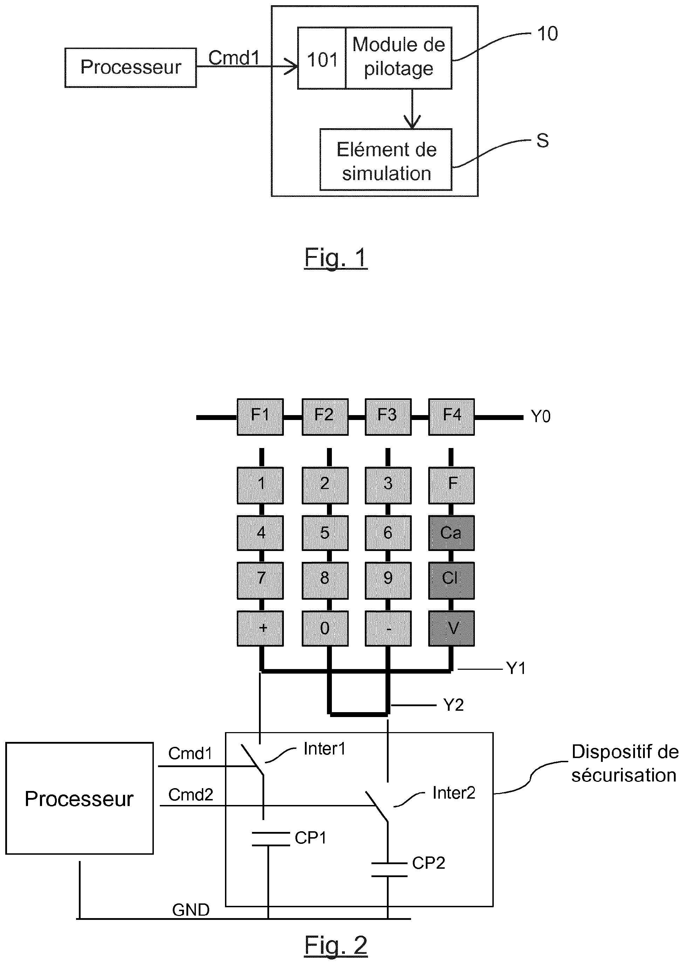

On décrit maintenant plus en détails un mode de réalisation d'un dispositif de sécurisation d'un clavier capacitif d'un terminal de paiement électronique, en référence avec les figures 1 à 4.

La figure 1 illustre un exemple d'un tel dispositif comprenant un module de pilotage 10 d'un élément de simulation S d'appui(s) touche(s).

Selon ce mode de réalisation de l'invention, le module de pilotage comprend également des moyens de réception 101 de commande(s) de simulation transmise(s) aléatoirement par un processeur (le processeur de gestion des touches du clavier capacitif ou bien un processeur en relation avec ce dernier) du terminal de paiement électronique.

Ainsi, à réception d'une commande de simulation Cmd1, transmise aléatoirement par le processeur du terminal de paiement électronique et reçue par les moyens de réception 101 du module de pilotage 10, celui-ci déclenche l'élément de simulation S d'un appui touche.

Un éventuel système d'espionnage des appuis touches sur le clavier capacitif du terminal de paiement électronique détecte alors un appui touche, sans pouvoir cependant l'identifier comme un appui touche simulé. L'espionnage se trouve alors perturbé et l'identification des données réellement saisies par l'utilisateur sur ce clavier capacitif du terminal de paiement électronique n'est donc plus possible.

Idéalement, le dispositif de sécurisation du clavier n'est activé que lors de la saisie réelle de données par un utilisateur sur ce clavier. En effet, il n'est pas nécessaire (ni économique en termes d'optimisation de l'utilisation des composants du terminal de paiement électronique), de simuler des appuis touches pendant toute l'utilisation du terminal de paiement électronique, mais uniquement pendant des phases où le clavier est utilisé, voire même uniquement lorsque des données identifiées comme sensibles sont susceptibles d'être saisies par un utilisateur. De plus, si on limite l'activation du dispositif de sécurisation à des instants précis, la détection de ce dispositif est rendue plus difficile et son action rendue plus efficace.

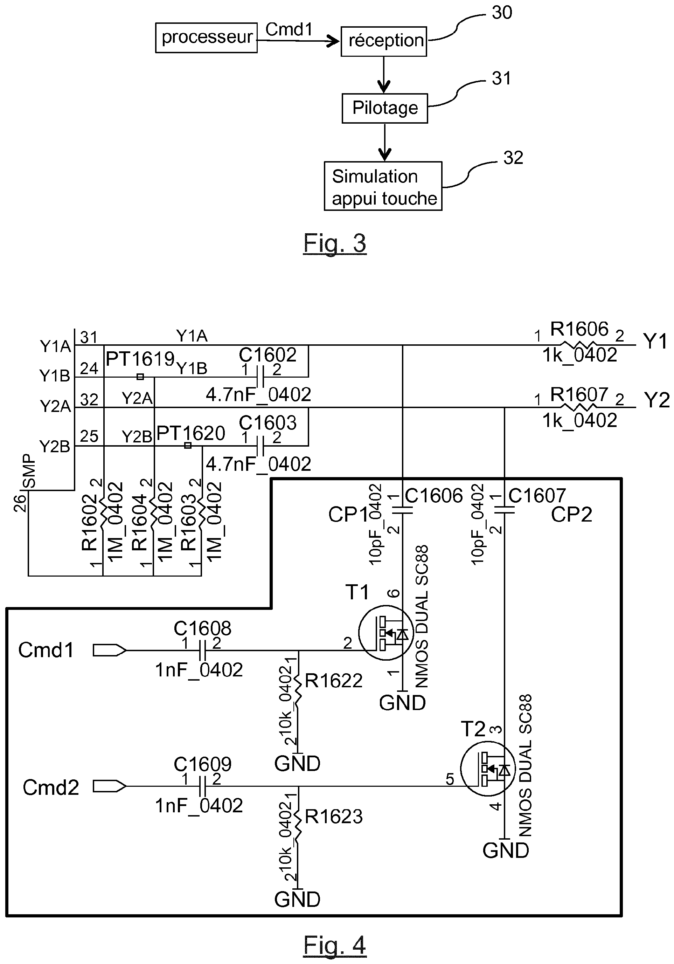

La figure 3 illustre les principales étapes mises en oeuvre dans un dispositif de sécurisation tel que présenté en figure 1, à savoir une première étape de réception 30 d'une commande de simulation transmise aléatoirement par le processeur du terminal de paiement électronique, déclenchant une étape de pilotage 31 d'un élément de simulation d'appui touche, entrainant une étape de simulation 32 d'un appui touche.

La figure 2 illustre quant à elle un premier exemple de mise en oeuvre d'un dispositif de sécurisation d'un clavier tactile tel que décrit ci-dessus, dans un terminal de paiement électronique.

Ainsi, dans ce mode de réalisation particulier, on considère que le clavier capacitif est constitué d'une « matrice » de quatre colonnes et quatre lignes, présentant classiquement des touches numériques (du 0 au 9), ainsi que des touches de fonction telles que « Validation », « Annulation », « Correction », etc ....

Chacune de ces touches est reliée à une électrode réceptrice permettant la détection d'un appui touche, ces électrodes réceptrices étant au nombre de trois dans cet exemple et notées Y0, Y1 et Y2.

Selon ce mode de réalisation de l'invention, le dispositif de sécurisation comprend un module de pilotage permettant de simuler au moins un appui touche pour toutes les touches numériques, susceptibles d'être utilisées par exemple pour la saisie d'un code confidentiel. Ainsi, le module de pilotage permet de simuler un appui sur les touches reliées aux électrodes réceptrices Y1 et Y2 du clavier capacitif, l'électrode réceptrice Y0 n'étant pas concernée selon ce mode de réalisation particulier de l'invention. Pour ce faire, deux éléments de simulation sont nécessaires, notés CP1 et CP2.

Il est à noter que, selon différents modes de réalisation de l'invention, les trois électrodes réceptrices peuvent être concernées, pour pouvoir simuler un appui sur toutes les touches du clavier, nécessitant potentiellement trois éléments de simulation.

Dans ce mode de réalisation, chaque élément de simulation met en oeuvre une capacité dite parasite, permettant, lorsqu'elle est déclenchée, de simuler un ou plusieurs appuis touches.

Ainsi, la capacité parasite CP1 est reliée, lorsqu'elle est déclenchée, à l'électrode réceptrice Y1 et la capacité parasite CP2 est reliée, lorsqu'elle est déclenchée, à l'électrode réceptrice Y2.

Par ailleurs, le module de pilotage comprend deux interrupteurs Inter1 et Inter2, qui se ferment à réception d'une commande de simulation spécifique reçue en provenance du processeur, notée respectivement Cmd1 et Cmd2. Ces deux interrupteurs Inter1 et Inter2 permettent de relier respectivement la capacité parasite CP1 à l'électrode réceptrice Y1 et la capacité parasite CP2 à l'électrode réceptrice Y2.

Ainsi, lorsqu'une commande de simulation Cmd1 est reçue par le dispositif de sécurisation, via les moyens de réception de son module de pilotage, l'interrupteur Inter1 relie la capacité parasite CP1 à l'électrode Y1, simulant ainsi, selon les paramètres de la commande de simulation Cmd1, un appui sur une ou plusieurs des touches 1, 4, 7, +, F, Ca, Cl et V.

De même, lorsqu'une commande de simulation Cmd2 est reçue par le dispositif de sécurisation, via les moyens de réception de son module pilotage, l'interrupteur Inter2 relie la capacité parasite CP2 à l'électrode Y2, simulant ainsi, selon les paramètres de la commande de simulation Cmd2, un appui sur une ou plusieurs des touches 2, 5, 8, 0, 3, 6, 9 et -.

En pratique, il n'est pas nécessaire que toutes les touches puissent être simulées, la simulation aléatoire de quatre touches numériques permet par exemple de leurrer un éventuel dispositif espion, tout en restant indétectable.

Selon une variante de réalisation, illustrée en figure 4, le module de pilotage du dispositif de sécurisation met en oeuvre un ou plusieurs transistors (T1, T2) permettant, sur réception d'une ou plusieurs commandes de simulation (Cmd1, Cmd2) du processeur du terminal de paiement électronique, de déclencher une ou plusieurs capacités parasites (CP1, CP2) permettant de perturber elles-mêmes une ou plusieurs électrodes réceptrices (Y1, Y2) du clavier capacitif.

Tout autre moyen permettant de fournir une faible capacité pour la simulation d'un appui touche sur un clavier capacitif peut bien sûr être mis en oeuvre, selon d'autres modes de réalisation particuliers de l'invention non décrits ici.

## Revendications

1. Dispositif de sécurisation d'un clavier capacitif d'un terminal de paiement électronique comprenant au moins un processeur de gestion des touches dudit clavier capacitif,
- ledit dispositif de sécurisation étant apte à communiquer avec ledit processeur,
- ledit dispositif de sécurisation comprenant un module de pilotage (10) d'au moins un élément de simulation (S) d'au moins un appui touche sur ledit clavier capacitif,
- ledit module de pilotage comprenant des moyens de réception (101) d'au moins une commande de simulation (Cmd1) transmise aléatoirement par ledit processeur,
- ledit élément de simulation (S) mettant en oeuvre au moins une capacité (CP1) d'une valeur prédéterminée, dite capacité parasite,
- ledit module de pilotage déclenchant ladite capacité parasite (CP1) par fermeture d'au moins un interrupteur, ladite capacité parasite (CP1) étant reliée, lorsque ledit interrupteur est fermé, à au moins une électrode réceptrice (Y1) reliée à au moins une touche dudit clavier capacitif, et
- ledit module de pilotage étant apte à piloter au moins deux capacités parasites (CP1, CP2), en déclenchant lesdites au moins deux capacités parasites (CP1, CP2) par fermeture d'au moins un interrupteur, à réception d'au moins deux commandes de simulation distinctes (Cmd1, Cmd2) en provenance dudit processeur, chacune desdites capacités parasites étant reliée, lorsque ledit au moins un interrupteur est fermé, à une électrode réceptrice distincte (Y1, Y2) permettant la simulation d'au moins toutes les touches numériques dudit clavier capacitif.

2. Dispositif de sécurisation selon la revendication 1, **caractérisé en ce que** ledit interrupteur est un transistor.

3. Dispositif de sécurisation selon la revendication 1, **caractérisé en ce que** ladite valeur prédéterminée de ladite capacité parasite correspond sensiblement à une valeur de capacité représentative d'un appui sur une touche dudit clavier capacitif.

4. Dispositif de sécurisation selon la revendication 3, **caractérisé en ce qu'**il est implémenté dans une zone sécuritaire dudit terminal de paiement électronique.

5. Terminal de paiement électronique, **caractérisé en ce qu'**il comprend un dispositif de sécurisation selon l'une quelconque des revendications 1 à 4.

6. Procédé de sécurisation d'un clavier capacitif d'un terminal de paiement électronique comprenant au moins un processeur de gestion des touches dudit clavier capacitif, le procédé comprenant les étapes suivantes, mises en oeuvre dans un dispositif de sécurisation apte à communiquer avec ledit processeur :
• une étape de réception (30) d'au moins une commande de simulation (Cmd1) transmise aléatoirement par ledit processeur ;
• une étape de pilotage (31), déclenchée par ladite étape de réception, d'au moins un élément de simulation (S) mettant en oeuvre au moins une capacité (CP1) d'une valeur prédéterminée, dite capacité parasite, et permettant de simuler au moins toutes les touches dudit clavier capacitif ;
une étape de simulation (32) d'au moins un appui touche sur ledit clavier capacitif par déclenchement d'au moins deux capacités parasites (CP1, CP2) par fermeture d'au moins un interrupteur, chacune desdites capacités parasites étant reliée, lorsque ledit au moins un interrupteur est fermé, à une électrode réceptrice distincte (Y1, Y2) permettant la simulation d'au moins toutes les touches numériques dudit clavier capacitif.

7. Programme d'ordinateur téléchargeable depuis un réseau de communication et/ou stocké sur un support lisible par ordinateur et/ou exécutable par un processeur, le programme comprenant des instructions de code de programme pour l'exécution du procédé de sécurisation selon la revendication 6, lorsqu'il est exécuté par un processeur.

## Patentansprüche

1. Vorrichtung zur Sicherung einer kapazitiven Tastatur eines elektronischen Zahlungsterminals, umfassend mindestens einen Prozessor zur Verwaltung der Tasten der kapazitiven Tastatur,
- wobei die Sicherungsvorrichtung geeignet ist, mit dem Prozessor zu kommunizieren,
- wobei die Sicherungsvorrichtung ein Modul (10) zum Steuern mindestens eines Simulationselements (S) mindestens eines Tastendrucks auf die kapazitive Tastatur umfasst,
- wobei das Steuermodul Mittel (101) zum Empfangen mindestens eines Simulationsbefehls (Cmd1) umfasst, der zufällig von dem Prozessor gesendet wird,
- wobei das Simulationselement (S) mindestens eine Kapazität (CP1) eines vorherbestimmten Werts, die als parasitäre Kapazität bezeichnet wird, implementiert,
- wobei das Steuermodul die parasitäre Kapazität (CP1) durch Schließen mindestens eines Unterbrechers auslöst, wobei die parasitäre Kapazität (CP1), wenn der Unterbrecher geschlossen ist, mit mindestens einer Empfangselektrode (Y1) verbunden ist, die mit mindestens einer Taste der kapazitiven Tastatur verbunden ist, und
- wobei das Steuermittel geeignet ist, mindestens zwei parasitäre Kapazitäten (CP1, CP2) zu steuern, indem die mindestens zwei parasitären Kapazitäten (CP1, CP2) durch Schließen mindestens eines Unterbrecher beim Empfang von mindestens zwei unterschiedlichen Simulationsbefehlen (Cmd1, Cmd2) von dem Prozessor ausgelöst werden, wobei jede der parasitären Kapazitäten, wenn der mindestens eine Unterbrecher geschlossen ist, mit einer unterschiedlichen Empfangselektrode (Y1, Y2) verbunden ist, wobei die Simulation mindestens aller numerischen Tasten der kapazitiven Tastatur gestattet wird.

2. Sicherungsvorrichtung nach Anspruch 1, **dadurch gekennzeichnet, dass** der Unterbrecher ein Transistor ist.

3. Sicherungsvorrichtung nach Anspruch 1, **dadurch gekennzeichnet, dass** der vorherbestimmte Wert der parasitären Kapazität im Wesentlichen einem Kapazitätswert entspricht, der für einen Druck auf eine Taste der kapazitiven Tastatur repräsentativ ist.

4. Sicherungsvorrichtung nach Anspruch 3, **dadurch gekennzeichnet, dass** diese in einer Sicherungszone des elektronischen Zahlungsterminals implementiert ist.

5. Elektronischer Zahlungsterminal, **dadurch gekennzeichnet, dass** dieser eine Sicherungsvorrichtung nach einem der Ansprüche 1 bis 4 umfasst.

6. Verfahren zur Sicherung einer kapazitiven Tastatur eines elektronischen Zahlungsterminals, umfassend mindestens einen Prozessor zur Verwaltung der Tasten der kapazitiven Tastatur, wobei das Verfahren die folgenden Schritte umfasst, welche in einer Sicherungsvorrichtung durchgeführt werden, die geeignet ist, mit dem Prozessor zu kommunizieren:
- einen Schritt (30) des Empfangens mindestens eines Simulationsbefehls (Cmd1), der zufällig von dem Prozessor gesendet wird,
- einen Schritt (31) des Steuerns, der von dem Empfangsschritt ausgelöst wird, mindestens eines Simulationselements (S), das mindestens eine Kapazität (CP1) eines vorherbestimmten Werts implementiert, die als parasitäre Kapazität bezeichnet wird, und die Simulation mindestens aller Tasten der kapazitiven Tastatur gestattet;
einen Schritt der Simulation (32) mindestens eines Tastendrucks auf die kapazitive Tastatur durch Auslösen von mindestens zwei parasitären Kapazitäten (CP1, CP2) durch Schließen mindestens eines Unterbrechers, wobei jede der parasitären Kapazitäten, wenn der mindestens eine Unterbrecher geschlossen ist, mit einer unterschiedlichen Empfangselektrode (Y1, Y2) verbunden ist, wobei die Simulation mindestens aller numerischen Tasten der kapazitiven Tastatur gestattet wird.

7. Rechnerprogramm, welches von einem Kommunikationsnetz heruntergeladen und/oder auf einem Träger gespeichert werden kann, der von einem Rechner gelesen und/oder von einem Prozessor ausgeführt werden kann, wobei das Programm Programmcodeinstruktionen zur Ausführung des Sicherungsverfahrens nach Anspruch 6 umfasst, wenn es von einem Prozessor ausgeführt wird.

## Claims

1. Securing device for securing a capacitive keypad of an electronic payment terminal comprising at least one processor for managing the keys of said capacitive keypad:
- said securing device being capable of communicating with said processor,
- said securing device comprising a driving module (10) for driving at least one simulation element (S) for simulating at least one keystroke on said capacitive keypad,
- said driving module comprising reception means (101) for receiving at least one simulation command (Cmd1) randomly transmitted by said processor,
- said simulation element (S) implementing at least one capacitor (CP1) of a predetermined value called a parasitic capacitor,
- said driving module activating said parasitic capacitor (CP1) by closing at least one switch, said parasitic capacitor (CP1) being connected, when said switch is closed, to at least one receiver electrode (Y1) connected to at least one key of said capacitive keypad, and
- said driving module being capable of driving at least two parasitic capacitors (CP1, CP2) upon reception of at least two distinct simulation commands (Cmd1, Cmd2) coming from said processor, by activating said at least two parasitic capacitors (CP1, CP2) by closing at least one switch, each of said parasitic capacitors being connected, when said switch is closed, to a distinct receiver electrode (Y1, Y2) enabling the simulation of at least all the numerical keys of said capacitive keypad.

2. Securing device according to claim 1, **characterized in that** said switch is a transistor.

3. Securing device according to claim 1, **characterized in that** said predetermined value of said parasitic capacitor corresponds appreciably to a capacitive value representing a stroke on a key of said capacitive keypad.

4. Securing device according to claim 3, **characterized in that** it is implemented in a secure zone of said electronic payment terminal.

5. Electronic payment terminal, **characterized in that** it comprises a securing device according to any one of the claims 1 to 4.

6. Method for securing a capacitive keypad of an electronic payment terminal comprising at least one processor for managing the keys of said capacitive keypad, said method comprising the following steps implemented in a securing device being capable of communicating with said processor:
• a reception step (30) for receiving at least one simulation command (Cmd1) transmitted randomly by said processor;
• a driving step (31), activated by said reception step , for driving at least one simulation element (S) implementing at least one capacitor (CP1) of a predetermined value called a parasitic capacitor and enabling the simulation of at least all the keystrokes on said capacitive keypad;
• a simulation step (32) for simulating at least one keystroke on said capacitive keypad by activating said at least two parasitic capacitors (CP1, CP2) by closing at least one switch, each of said parasitic capacitors being connected, when said switch is closed, to a distinct receiver electrode (Y1, Y2) enabling the simulation of at least all the numerical keys of said capacitive keypad.

7. Computer program downloadable from a communication network and/or stored on a computer-readable medium and/or executable by a processor said program comprising program code instructions to execute the method of securing according to claim 6 when it is executed by a processor.
